# EUROPEAN PATENT SPECIFICATION

(11) **EP 4 034 460 B1**
(45) Date of publication and mention of the grant of the patent: **05.03.2025**
(21) Application number: 20789315.7
(22) Date of filing: 22.09.2020
(51) Int. Cl.: B63J 4/00, B63B 79/30

(54) **SYSTEM AND METHOD FOR PERFORMING DIAGNOSTICS OF A WATER SYSTEM ON-BOARD A WATERCRAFT**
SYSTEM UND VERFAHREN ZUM DURCHFÜHREN EINER DIAGNOSE EINES WASSERSYSTEMS AN BORD EINES WASSERFAHRZEUGS
SYSTÈME ET PROCÉDÉ POUR EFFECTUER DES DIAGNOSTICS D'UN SYSTÈME D'EAU À BORD D'UNE EMBARCATION

(30) Priority: 27.09.2019 US 201962906825 P
(43) Date of publication of application: 03.08.2022
(73) Proprietor: Electrosea LLC, Wayzata, MN 55391 (US); Consentino, Louis Ciro, Palm Beach Gardens, Florida 33410 (US); Cosentino, Daniel L., Wayzata, Minnesota 55931 (US); Golden, Brian Alan, Eden Prairie, Minnesota 55347 (US)
(72) Inventor: COSENTINO, Louis Ciro, Palm Beach Gardens, Florida 33410 (US); COSENTINO, Daniel L., Wayzata, Minnesota 55931 (US); GOLDEN, Brian Alan, Eden Prairie, Minnesota 55347 (US)
(74) Representative: Clark, Jane Anne
(86) International application number: PCT/US2020/051943
(87) International publication number: WO 2021/061612

(56) References cited:
- WO-A1-97/25595
- US-A1- 2002 029 130
- US-A1- 2019 106 339
- US-A1- 2019 242 773
- US-B2- 7 254 518

## Description

### Cross-Reference to Related Applications

This application is being filed on September 22, 2020, as a PCT International Patent Application and claims priority to and the benefit of U.S. Provisional Patent Application Serial No. 62/906,825, filed September 27, 2019.

### Technical Field

The present disclosure relates generally to monitoring and maintenance of water systems of watercraft, including but not limited to water systems that include biocide generating systems for reducing or eliminating biofouling within the water system.

### Background

Watercraft, particularly marine watercraft, often include on-board raw water systems (hereinafter, "water systems" or "on-board water systems") which use raw water drawn from the bodies of water on which the watercraft are buoyantly supported. A prevalent type of on-board water system is configured to pass drawn water through a heat exchanger used to cool refrigerant associated with air conditioning systems, chillers, and the like. Other on-board water systems include potable water systems, sanitation systems, propulsion systems, engine cooling systems, bait-well filling systems and systems corresponding to ancillary equipment. Bio-fouling caused by bio-growth (e.g., marine growth) can result in the clogging of on-board water systems, and the inefficient operation, overheating, and malfunction of equipment dependent upon the water systems thereby leading to costly downtime and expensive repair. Commonly, the issue of bio-growth within on-board water systems is addressed by periodic (e.g., semi-annual) acid cleaning of the water systems. Acid cleaning is expensive, time consuming, and involves the use of harsh and hazardous chemicals.

US 2019/0106339 describes a biocide generating system for inhibiting bio-fouling within a water system of a watercraft. The water system is configured to draw water from a body of water on which the watercraft is supported. The biocide generating system includes an electrode arrangement adapted to be incorporated as part of an electrolytic cell through which the water of the water system flows. The electrolytic cell includes a strainer through which water passes.

US 7,254,518 describes a pressure transmitter which diagnoses the condition of a primary element and/or an impulse line which connects to a pressure sensor. A different circuit coupled to the pressure sensor has a difference output which represents the sensor pressure minus a moving average. A calculate circuit receives the difference output and calculates a trained output of historical data obtained during an initial training time. The calculate circuit also calculates a monitor output of current data obtained during monitoring or normal operation of the transmitter. A diagnostic circuit receives the trained output and the monitor output and generates a diagnostic output indicating a current condition.

WO 97/25595 describes a transmitter in a process control system for measuring flow rate. Total pressure and differential pressure of process fluid flowing through a process pipe are measured. Static pressure is determined based on the total pressure. The calculated static pressure is used to determine the fluid density and the gas expansion factor of the process fluid flowing in the pipe. This information is used to calculate the flow rate of the process fluid.

### Summary

The present invention is set out in the appended claims. In general terms, the present disclosure relates to operating diagnostics of on-board water systems of watercraft, including on-board water systems that include biocide generation to remove and/or prevent biofouling of the on-board water system

The biocide generating system functions to inhibit biofouling within the on-board water system such that related equipment (e.g., a heat exchanger) of the watercraft can be operated at peak performance with minimal to no downtime. The biocide generating system is configured such that each component of the on-board water system, including each component of the biocide generating system, that is exposed to water during normal operation of the on-board water system is also periodically or continuously treated with biocide generated by the biocide generating system. In this manner, the biocide generating system not only treats the water-reliant components that are downstream of the biocide generating system (e.g., a heat exchanger used to cool refrigerant associated with air conditioning systems, chillers, and the like, a sanitation system, a propulsion system, an engine cooling system, etc.), but also components of the onboard water system that may be positioned upstream of the biocide generating system, such as a water intake or port, a strainer that strains water being drawn into the onboard water system, etc.

In certain examples, the biocide generating system can include at least one or at least two electrolytic modules for providing the in situ generation of biocide within the water passing through the on-board water system. In certain examples, the biocide generating system can be continuously operated or intermittently operated. In certain examples, a biocide generating system in accordance with the principles of the present disclosure eliminates the need for acid cleaning of the on-board water system, or substantially reduces the frequency that acid cleaning of the on-board water system is required.

In certain examples, the biocide generating system is configured to operate in multiple modes. In a cleaning or purging mode, the biocide generating system is used to eliminate organisms (e.g., marine growth such as mollusks, barnacles, etc.) already present in the on-board water system, including the biocide generating system. In a maintenance mode, the biocide generating system operates to flush biocide through the on-board water system to prevent or reduce future marine growth. In some examples, the concentration of biocide within the on-board water system is higher during the purging mode than it is during the maintenance mode. For example, if the biocide generating system includes more than one electrolytic module, more of the modules can be active during the cleaning mode than during the maintenance mode to thereby generate a greater amount of biocide to increase the concentration of biocide in the water flowing through the on-board water system. Alternatively, more current can be supplied to the electrode arrangement during the cleaning mode than in maintenance mode to generate a higher concentration of biocide in purging mode.

In some examples, a watercraft is constructed with a biocide generating system according to the present disclosure integrated therein. In other examples, a watercraft is retrofitted with a biocide generating system in accordance with the present disclosure. Particularly in the case of a retrofitted watercraft, it can be advantageous to initially operate the biocide generating system in a cleaning mode to purge biological buildup in the on-board water system that developed before installation of the biocide generating system. Thereafter, the biocide generating system can be operated in maintenance mode to inhibit further biofouling of the on-board water system.

Operating the biocide generating system in purging mode can be particularly advantageous when a watercraft that has already spent time in the water is retrofitted with the biocide generating system. In these situations, biomaterial in the on board water system that already accumulated prior to the installation of the biocide generating system is killed by the biocide, releasing the biomaterial debris (e.g, barnacles, shells) into the flow stream of the onboard water system. The release, and therefore mobile, debris can clog, damage or cause faults or malfunctions in components of the onboard water system. Stray mobile debris can likewise cause similar problems even when the system is not in purging mode, for example, when the system is running in maintenance mode.

In accordance with aspects of the present disclosure, one or more flow meters are positioned along a flow path of on onboard water system that includes a biocide generating system. As used herein, a flow meter is a flow sensing arrangement or device that measures one or more variables of the on-board water system from which flow (i.e., rate of flow) is measured or can be calculated. Flow meter, flow sensing arrangement, and flow sensing device may be used interchangeably throughout this disclosure. Non-limiting examples of such variables include the flow itself (i.e., a direct measurement of the flow), pressure, and temperature. Flow can be calculated from pressure readings of the water in the flow path, for example, based on known parameters of the on-board water system and/or the watercraft supporting it. Raw pressure readings are converted or normalized based on the particular known flow characteristics of the particular watercraft. Once converted, the data from the pressure meter can be used to analyze the flow and perform diagnostics. With respect to temperature, the temperature of electronics can provide an indication of flow since temperatures tend to increase when electric current stays steady while water flow reduces since the water flow reduction provides less cooling. Thus, higher sensed electronics or housing temperatures can indicate reduced water flow.

Thus, non-limiting examples of flow meters in accordance with the present disclosure include direct flow meters, pressure sensors, and temperature sensors. An example of a direct flow meter is a hall-effect flow meter, such as an electronic paddle flow meter. Another type of flow meter that can be used in accordance with the present disclosure is an ultrasonic flow sensor that measures the flow of water based the change in time of an ultrasonic signal through the water. For example, an ultrasonic flow sensor can be configured and positioned to generate ultrasound pulses in different propagation directions, and average the difference in measured transit time between ultrasound pulses propagating into and against the direction of water flow or, alternatively by measuring the frequency shift between pulses propagating in different directions relative to the flow using Doppler effect principles.

The flow meter can be positioned anywhere along the flow path in a position such that it is capable of measuring a variable from which flow is known or can be determined. In some examples, a flow meter is positioned to detect flow out of the biocide generating system. Other non-limiting example positions of the flow meter include, e.g., immediately downstream of the biocide generator, immediately upstream of the biocide generator, or within the canister that holds the biocide generator.

In some examples, the water system can include a primary flow meter and one or more additional flow meters (e.g., secondary flow meters) positioned elsewhere in the on board water system, e.g., upstream and/or downstream of a pump, upstream and/or downstream of a through hull fitting at a raw water inlet and/or or a treated water outlet, upstream, downstream, and/or within a strainer canister, upstream and/or downstream of a water-reliant component of an onboard water system, within a recirculation conduit that directs biocide-treated water to a raw water inlet and/or to the upstream side of a strainer and/or the biocide generator itself, etc. A primary flow meter and secondary flow meter need not be the same type of device. For example, the primary flow meter can be a direct flow meter and a secondary flow meter can be a pressure sensor or a temperature sensor.

An on-board water system (or simply "water system") in accordance with the present disclosure is configured to draw water from a body of water (also referred to herein as a "water source") on which the watercraft is buoyantly supported. In some examples, the water source contains saltwater and the biocide generating system uses the saltwater (e.g., seawater, brackish water) to generate biocide via electrolysis, in which case the on-board water system is installed on a seaworthy watercraft and the water source supplies salt water (e.g., seawater) to the on-board water system. In at least some of these examples, the biocide generated by the biocide generating system is or at least partially consists of chlorine. In other examples, the biocide generating system uses water from fresh water sources (e.g., lakes, rivers) to generate biocide via electrolysis.

The biocide generating system includes an electrode arrangement adapted to be incorporated as part of an electrolytic cell through which the water from the water source flows.

The one or more flow meters of the onboard water system are used to ensure that an appropriate amount of biocide is being generated and circulated by the on-board water system according to the needs of the on-board water system, which can vary over time. For example, when a water-reliant component of an onboard water system is off and not drawing water from the water source, the amount of biocide needed may be reduced. On the other hand, if during a water-reliant component's downtime it is desirable to treat other portions of the on-board water system, e.g., a recirculation line, a strainer, a through-hull fitting, the canister of the biocide generator, etc., with biocide, then the proper amount of biocide produced (as compared with when the water-reliant component is actively drawing water) may be reduced by a lesser amount or not at all.

Detecting and diagnosing deviations from normal flow characteristics therefore can be critical to proper operation of the on-board water system and ensuring that proper amounts of biocide are being produced and introduced to various components of the onboard water system at any given time.

The one or more flow meters interface with one or more processors. The one or more processors execute computer-readable instructions that are stored on a computer-readable medium, e.g., a non-transitory computer-readable medium. The flow data received from the one or more flow meters is processed according to the computer-readable instructions, which can result in one or more actions occurring. For example, the computer-readable instructions, when executed by the one or more processors, can cause an alert to be issued that an anomalous or deviant flow has been detected, referred to herein as a fault. The alert can be provided (e.g., via a wireless network) to a remote location or device, e.g., a smart phone, tablet, remote computerized device, etc., and/or or to a local user interface, such as a control panel or graphical display in a control room on-board the watercraft. The alert can be an audible alert, a visual alert (e.g., in the form a graphically displayed text or activation of a warning light), a tactile alert (e.g., a vibration of a user device), combinations thereof, etc.

In at least some examples, the alert can indicate (e.g., textually, audibly, etc.) a diagnosis or probable diagnosis of the fault (e.g., the location of a component of the onboard water system that has the fault), and/or recommend a remedial action, e.g., to replace a component of the onboard water system, to shut down the onboard water system, to increase or decrease current to the biocide generator, etc.

In some examples, the computer-readable instructions cause the one or more processors to perform automatic remedial action that is appropriate to the diagnosed fault.

Some remedial actions, such as turning a pump on or off, adjusting the magnitude or direction of pump displacement, and regulating electrical current to the biocide generating electrode arrangement can be performed (either automatically, or in response to user input via a user interface) using a control system having one or more controllers that interface with the hardware (electrodes, pump etc.), the one or more processors, and the user interface through which user can input control commands.

The control system includes an electrical power circuit for establishing a flow of electrical current between first and second electrodes of the electrode arrangement to generate a biocide in the water which flows through the electrolytic cell. **In** some examples, the control system also includes a gas sensing circuit for detecting when gas collects in the electrolytic cell. In some examples, the control system varies a magnitude of the electrical current established between electrodes of the electrode arrangement in direct relation to the rate of water flow sensed by the flow sensor. For example, a processor can increase the constant electrical current with an increase in the water flow rate and decrease the constant electrical current with a decrease in the water flow rate so as to maintain a constant biocide concentration (or at least a biocide concentration within a target range) in the water flowing along the flow path.

The control system can be configured to terminate the generation of biocide when the collection of gas is detected. If any of one or more flow monitoring means provides an indication that no flow is occurring within the system, the control system can disable the electrolytic cell. For example, if the flow sensor provides a no-flow indication to the control unit or the gas sensing system provides an indication to the control unit that gas is collecting at the electrolytic cell, the control unit will disable the electrolytic cell.

In some examples, the control system also is adapted to determine when water is not flowing through the water system, and to terminate the generation of biocide when it has been determined that water is not flowing through the water system. As mentioned, the control system can determine whether water is flowing through the water system by various means such as sensors (e.g., gas collection sensors, flow sensors, etc.) or by monitoring the operational status (e.g., on or off) of the system pump or pumps or by one or more flow sensors. When the control system determines that water is no longer flowing through the water system, the control system preferably terminates the generation of biocide by terminating power to the electrode arrangement. The control system can terminate the generation of biocide immediately after it has been established that water is no longer flowing through the water system. Alternatively, the control system can allow the system to continue to generate biocide for a predetermined time after water flow has ceased and then terminate the generation of biocide after the predetermined time has expired.

According to certain aspects of the present disclosure, a water system of a watercraft is provided, the water system being configured to draw water from a water source on which the watercraft is supported through at least a first port positioned in a body or hull of the watercraft, the water system defining a flow path when water is being drawn through the first port into the water system, the system comprising: a flow meter for measuring flow in the flow path; and a diagnostics system operatively connected to the flow meter and configured to: receive flow readings generated using the flow meter; detect a flow change in the flow readings; classify the flow change as one of a plurality of change classifications to provide a classified flow change; and diagnose a fault in the water system based on the classified flow change.

According to further aspects of the present disclosure, a water system of a watercraft is provided, the water system being configured to draw water from a water source on which the watercraft is supported through at least a first port positioned in a body or hull of the watercraft, the water system defining a flow path when water is being drawn through the first port into the water system, the system comprising: an electrode arrangement adapted to be incorporated as part of an electrolytic cell through which water drawn from the water source flows; a flow meter for measuring flow in the flow path; and a diagnostics system operatively connected to the flow meter and configured to: receive flow readings generated using the flow meter; detect a flow change in the flow readings; classify the flow change as one of a plurality of change classifications to provide a classified flow change; and diagnose a fault in the water system based on the classified flow change.

According to further aspects of the present disclosure, a method of performing diagnostics on a water system of a watercraft is provided, the water system being configured to draw water from a water source on which the watercraft is supported through at least a first port positioned in a body or hull of the watercraft, the water system defining a flow path when water is being drawn through the first port into the water system, the method comprising: receiving flow readings; detecting a flow change in the flow readings; classifying the flow change as one of a plurality of change classifications to provide a classified flow change; and diagnosing a fault in the water system based on the classified flow change.

The contents of International Patent Application Nos. PCT/US2018/054200 filed October 3, 2018 and PCT/US2020/027088 filed April 7, 2020 are hereby fully incorporated by reference in their entireties.

A variety of additional aspects will be set forth in the description that follows. The aspects can relate to individual features and to combinations of features. It is to be understood that both the forgoing general description and the following detailed description are exemplary and explanatory only and are not restrictive of the broad inventive concepts upon which the examples described herein are based.

### Brief Description of the Drawings

The accompanying drawings, which are incorporated in and constitute a part of the specification, illustrate aspects of the present disclosure and together with the description, serve to explain the principles of the disclosure. A brief description of the drawings is as follows:
Figure 1 schematically illustrates a watercraft including an embodiment of an on-board water system incorporating an example diagnostics system according to the present disclosure.
Figure 2 schematically illustrates a flow path of an on-board water system of a watercraft, including an example diagnostics system according to the present disclosure.
Figure 3 is an example flow plot generated and used by an on-board water system of the present disclosure.
Figure 4 is a further example flow plot generated and used by an on-board water system of the present disclosure.
Figure 5 is a further example flow plot generated and used by an on-board water system of the present disclosure.
Figure 6 is an example process flow according to the present disclosure.
Figure 7 is a block diagram showing an example configuration of a diagnostics system and other components constructed to realize one or more aspects of the present disclosure.
Figure 8 is a graph that schematically illustrates various example flow changes from high frequency samplings.
Figure 9 is a graph that schematically illustrates an example statistical model for detecting a fault in an on-board water system based on changes in flow (i.e., flow rate) over time.

### Detailed Description

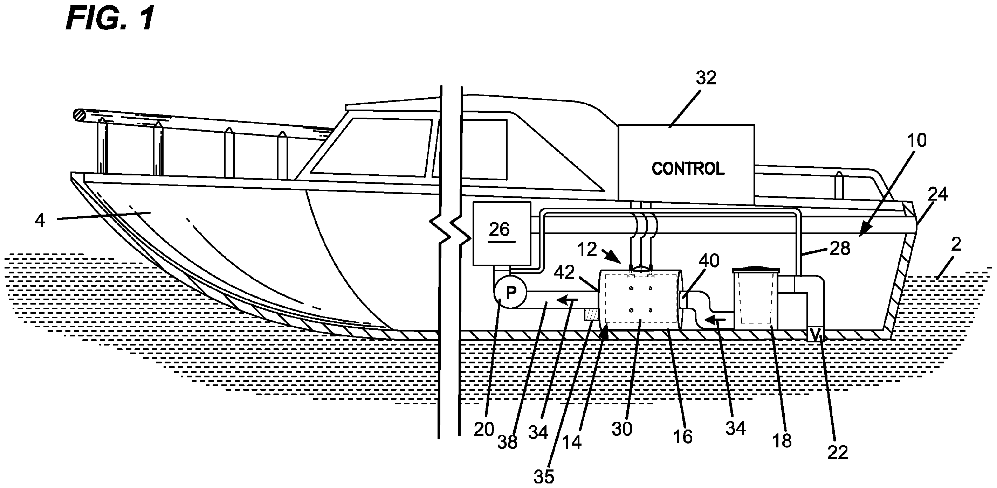

Figure 1 schematically illustrates an example watercraft 4 including an embodiment of an onboard water system 10 incorporating an example diagnostics system according to the present disclosure. The watercraft 4 is shown buoyantly supported by a body of water 2. The body of water also acts as a water source that sources the onboard water system 10 with raw water. The water system 10 defines an upstream to downstream direction of a flow path as illustrated by the arrows 34. A biocide generating system 12 includes an electrolytic cell 14 incorporated within a stand-alone housing or canister 16 (e.g., an in-line housing). The housing 16 defines an inlet 40 at the upstream end of the electrolytic cell 14, and an outlet 42 at the downstream end of the electrolytic cell 14. The configuration of the housing 16 is one example of many possible configurations. The stand-alone housing 16 has been integrated into an on-board water system at a location between a strainer 18 and a pump 20. The on-board water system 10 includes a through-hull fitting or THF 22 defining an inlet, an outlet 24 defining a port, and one or more water-reliant components 26 (e.g., a heat exchanger) downstream (i.e., on the high pressure side) of the pump 20. The THF 22 can include a valve (e.g., a seacock) to control the opening and closing of the inlet. In the example system 10 the pump 20 is positioned downstream of the electrolytic cell. In other examples, the pump 20 is positioned upstream of the electrolytic cell.

The strainer 18 is a device that mechanically filters the water drawn into the water flow path to prevent undesirable material (e.g., particulates over a certain size) from passing through the water flow path. It will be appreciated that water strainers typically include removable filters that are periodically removed from the strainer, cleaned and then returned to the strainer. It will be appreciated that different filters can have different levels of filtration ranging from coarse to fine. Additionally, filters can have different configurations depending upon the type of strainer used. Some types of filters can include a basket type configuration. Other filters can be configured as cylindrical sleeves. Raw water drawn from the source 2 via the inlet of the THF 22 enters an interior of the straining filter through the opening in the housing of the strainer. In some examples the water is comingled with already strained and biocide-treated water via the recirculation conduit 28. The water then passes through the filter media and exits the housing of the strainer where it flows to the electrode arrangement 30 of the electrolytic cell 14. Particulate materials strained by the filter media remain on an inside of the strainer. When the straining filter is removed from the housing of the strainer 18, the strained material remains on the inside of the filter media and is preferably removed during cleaning.

The electrode arrangement 30 is mounted within the stand-alone housing 16. The terminal posts of electrodes of the electrode arrangement are connected to a power source of the control system 32 by leads. In certain examples, the power source is an electrical current source configured to apply a current across the electrodes to drive electrolysis for generating biocide within the stand-alone housing 16. The current source can include an electronic circuit that delivers or absorbs an electric current independent of the voltage across it. The control system 32 can interface with the pump 20 to determine whether the pump 20 is on or off, what speed the pump is operating, and what direction the pump is operating. When the control system 32 detects that the pump 20 is in an off state, the control system 32 can terminate power to the electrolytic cell 14. The system 10 includes a flow meter 35 for determining flow through the housing 16, and can vary a magnitude of the electrical current based on detected water flow. As described above, the flow meter 35 can be any device that directly measures flow or measures a variable from which flow can be determined.

The biocide may also move by diffusion or pumping action in a direction extending from the electrolytic cell toward the inlet 22 of the water system via a recirculation conduit 28. In this way, water containing biocide can move into the strainer 18 to inhibit bio-growth in the strainer 18 or other components of the water system located upstream of the electrolytic cell.

In certain examples, one or more valves can be provided within the recirculation conduit 28 or other flow conduits or pipes of the onboard water system 10 such as the pipe 38 immediately downstream of the outlet 42 of the housing 16 of the electrolytic cell 14. The valves can be manually controlled, e.g., to change from a cleaning mode to a maintenance mode or vice versa. Likewise, the amount of power provided to the electrolytic cell can be adjusted via the control system 32 depending on whether the water system is in a cleaning mode or maintenance mode.

In some examples, the valves can be linked to flow meters and automatically adjusted via the control system 32 to provide for flow of treated water (i.e., water treated with biocide by the electrode arrangement 30) to portions of the water system that are both downstream and upstream of the electrode arrangement 30. In some examples, where treated water is directed and/or in what amounts depends on whether the water-reliant components 26 of the onboard water system presently require or do not require water. If water is not needed in the water-reliant component(s) 26, for example, one or more valves can shut off flow of biocide treated water to the water-reliant components while allowing gravity, residual pressure differential, or pump driven flow of treated water to other components of the onboard water systems such as the strainer 18, the THF 22, and/or any flow conduits that are upstream via the recirculation conduit. The system 10 may also be configured to operate in a mode where biocide treated water flows to the water-reliant component(s) 26 and to the upstream components of the water system at the same time. Conduit size and/or valves (optionally, controlled by the control system 32 based on flow and/or pressure feedback) can be used to meter the flow of the biocide treated water such that the water demands of the water reliant-component(s) are met while still treating other components of the water system with biocide.

In certain examples, the water flow path may provide water to water system components for which biocide is not desired. Examples of such components can include potable water systems for providing drinking water (drinking water systems often include reverse osmosis filtration systems that are not compatible with significant levels of chlorine), shower water, water for faucets, or other potable water uses on the water vessel. A valve can be used to open and close fluid communication between the main water flow path and such a biocide incompatible component. When water system components that are incompatible with the presence of biocide in the water are in need of water from the water flow path, power to the electrolytic cell of the biocide generating system can be temporarily turned off so as to inhibit the generation of biocide. It will be appreciated that the control system 32 can interface with such water systems and can automatically disable the biocide generating system when water is needed for a potable water system, a bait well, or other water system where biocide is not desired.

In the example of Figure 1, the watercraft 4 is shown with only one on-board water system 10 having one water-reliant component 26. In other examples, watercraft may include multiple on-board water systems each having one or more pumps that operate independently of one another. Each water system can include one or more water-reliant components. It will be appreciated that separate biocide generating systems can be incorporated into each of the on-board water systems of the watercraft and can be controlled by a common control unit.

It will be appreciated that biocide generating systems in accordance with the principles of the present disclosure can be used for watercraft launched in both saltwater and freshwater. However, a preferred biocide in accordance with the aspects of the present disclosure includes chlorine generated through the electrolysis of seawater. Therefore, for freshwater watercraft, biocide generating systems in accordance with the principles of the present disclosure can include a salt supplementing station where salt such as sodium chloride is added to the water of the on-board water system before the electrolytic cell of the biocide generating system. For marine watercraft, the natural salt present in sea water or brackish water is sufficient to allow for the in situ generation of biocide within the water flowing through the water flow path. For freshwater applications, it is contemplated that other biocides such as copper could also be used. In such systems, an electrolytic cell including electrodes of copper can be used to introduce copper as a biocide into the water of the water flow path.

As indicated above, a preferred biocide generated by biocide generating systems in accordance with the principles of the present disclosure includes chlorine and/or a derivative thereof. Other biocides can also be generated dependent upon the type of salts present in the water. The process for generating biocide can include an in situ process where sea water (e.g., ocean water, brackish water, etc.) is subjected to electrolysis as the sea water flows through an electrolytic cell. The electrolytic cell can include electrodes defining an anode (e.g., a positive pole) and a cathode (e.g., a negative pole). The direct passage of electrical current through the sea water between the anode and the cathode drives electrolysis that separates the water and the salt into their basic elements. In certain examples, chlorine is generated at the anode and hydrogen is generated at the cathode. The chlorine generated at the anode and/or derivatives thereof can function as a biocide for inhibiting bio growth in conduits and equipment of the water flow path located after from the electrolytic cell. In certain examples, the control system can periodically reverse the polarity of the electrodes to minimize scaling.

In certain examples of the present disclosure, electrolytic cells in accordance with the principles of the present disclosure can include electrode arrangements each including first and second electrodes. The first electrode can include a plurality of first electrode plates and the second electrode can include a plurality of second electrode plates. The first and second electrode plates can be interleaved with respect to one another such that interstitial spaces are positioned between each of the first and second electrode plates. The saltwater flowing through the water flow path flows within the interstitial spaces and is electrolyzed as the water flows through the interstitial spaces such that chlorine is generated. In certain examples, each of the electrode plates includes an electrically conductive material such as a metal material. In one example, the metal material may include titanium. In certain examples, the electrode plates can be coated with a catalyst coating adapted to catalyze the generation of chlorine. In one example, the catalyst coating can include a platinum group metal. Example platinum group metals suitable for use in a catalyst coating include iridium and ruthenium. In certain examples, the catalyst coating may include metal oxide mixtures that can include oxides of iridium, and/or oxides of ruthenium and/or oxides of titanium and/or oxides of tantalum and/or oxides of niobium. It will be appreciated that the above catalysts are merely examples and that other catalyst mixtures can also be used. In certain examples, the catalyst coating including metal oxide mixtures may not be applied to the outside major surfaces of the outermost electrode plates in the electrolyte cell. Eliminating the coating on the outside major surfaces can help to reduce and/or eliminate scale build-up.

It will be appreciated that the rate at which biocide is generated is directly dependent upon the magnitude of the electrical current directed across the electrodes. Also, the amount of biocide generated is dependent upon the amount of time the cell is generating biocide. Further, the concentration of biocide generated in the electrolyte (e.g., sea water or other salt water) flowing through the system is dependent upon water flow rate. Thus, the concentration of biocide present in the flowing electrolyte of the system can be controlled by varying the electrical current level across the electrodes and/or cycling the cell On and Off to vary the time of operation of the cell and/or varying the water flow rate through the system. In certain examples, the water flow rate through the system is monitored, and the electrical current level and/or the time of operation of the cell are varied (e.g., controlled, regulated, etc.) to achieve a target biocide concentration in the water of the system, which can in turn depend on the operating mode (e.g., cleaning versus maintenance) of the system. It will be appreciated that the water flow rate can be determined based on flow information derived from the pump control or by one or more flow meters.

In certain examples, the control system 32 can regulate the amount of chlorine generated based at least partially on a measured flow rate of the water flowing through the electrolytic cell for electrolysis.

In certain examples, pulsing the current to the electrodes On and Off results in slugs of chlorine treated water passing through the system, rather than a continuous flow of water having a constant chlorine concentration. In other examples, the total output of chlorine is controlled independent of the water flow rate through the electrolyte unit.

In certain examples, chlorine sensors for sensing chlorine concentration in the water can be provided at one or more locations along the flow path of the water system. For examples, the sensors can be positioned at the electrolytic cell unit, at the seawater outlet, or at other positions along the flow path of the water system. The control system can interface with the sensors and can use chlorine concentration data from the sensors to control or vary operation of the electrolytic cell. For example, based on the sensed chlorine concentration or concentrations, the controller can increase or decrease water flow through the electrolytic cell unit and/or the electrical current provided to the electrolytic cell unit and/or an On and Off pulse duration of the cell unit. In this way, the controller can modify the rate of biocide generation and/or the water flow rate of the system in real time to maintain a desired chlorine concentration throughout the system or at discrete locations in the system. Moreover, the controller can control operation of the system so that the residual chlorine in the water discharged from the outlet 24 does not exceed a predetermined concentration level.

As mentioned, for different applications, biocide concentrations higher or lower than the above specified concentrations may be generated. For example, under certain circumstances, it may be desired to "shock" the water flow path (e.g., for purging purposes). For such applications, the biocide generating system can generate significantly higher concentrations of biocide as needed.

In a preferred example, the biocide generating system includes an adaptive dynamic control system that dynamically varies the magnitude of the current applied across the electrodes in direct proportion to the flow rate of water through the electrolytic cell. Thus, the rate of biocide production varies directly with the water flow through the system. The magnitude of electrical current used to provide a desired biocide concentration in the flow of sea water through the electrolytic cell for a given water flow can be determined by a method such as an algorithm or look-up table. The flow can be determined by a flow meter. By dynamically controlling the rate of biocide generation, it is possible to maintain the concentration of biocide at a target level or within a target range regardless of the water flow.

The biocide generating system preferably operates to generate biocide while water is flowing through the water system. In this way, biocide generated at the electrolytic cell can be carried with the flowing water to treat the conduit and components of the water system located after the electrolytic cell. As indicated above, biocide can be generated continuously or intermittently as the water flows through the system. In certain examples, the biocide generating system may also operate to generate biocide for a controlled or limited duration when water is not flowing through the water system (e.g., when the pump is off). Preferably, the duration is short enough to prevent the excessive accumulation of gas within the system. In certain examples, the biocide generating system may operate intermittently to generate biocide while water is not flowing through the system so as to generate enough biocide to treat the portion of the water system upstream of the electrolytic cell without collecting excessive gas within the system (e.g., within the strainer). Preferably, for a majority of the time that water is not flowing through the water system, the biocide generating system will not be generating biocide.

As can be appreciated, the system 10 includes various components along the flow path of water between the THF 22 and outlet 24. These components can include a strainer, an electrolytic cell and canister, pipes, valves, a pump, water reliant components, flow sensors, pressure sensors, chlorine sensors, temperature sensors, etc. As the water system 10 is subject to unpredictable environmental factors associated with floating and traveling in natural bodies of water, it can be appreciated that any of these components can fail or partially fail for a variety of reasons. Each failure or partial failure (e.g., reduction in operating performance) can be externally caused or internally caused. Examples of externally caused component failures include, e.g., a partial or total clogging or damaging impact by debris (e.g., biofouling debris) of the component. Examples of internally caused component failures include malfunctions of the component itself, e.g., an electrical short, a damaged part, etc.

Due to the large number and different types of components of the system 10 and the inherent difficulty in physically accessing components of the system 10, the ability to quickly isolate a location of a fault and the type of fault, and thereby determine and execute an appropriate remedial action to remedy the fault, can be critical to the running efficiency of the water system 10, as well as the overall operation of the watercraft 4. Downtime of the system can be minimized, the occurrence of later faults triggered by earlier faults can be minimized, and component lifetime can be maximized. For example, as described above, for an onboard water system that includes a biocide generating electrolytic cell to purge or prevent biofouling within the flow path of the water system, it is important to generate the appropriate amount of biocide at a given time based on the particular needs of the water system at that time. Thus, if there is a fault, it can be important to ascertain if the fault lies with the biocide generator itself or with another component, such as a flow meter or pressure meter, whose readings are fed to the control system to establish the amount of biocide produced. For example, if the readings of the flow meter are faulty (due to a partial or total clog or an internal malfunction of the flow meter), this can cause too little biocide to be generated, resulting in increased biofouling and a cascade of additional faults caused by the biofouling.

As described in more detail below, by analyzing output from flow meters positioned along the flow path of the onboard water system, a fault can be detected, isolated, diagnosed, and remedied in an efficient manner. In some examples, readings (e.g., direct flow readings, pressure readings, temperature readings) output by one or more flow meters is used to detect, isolate, and/or diagnose a fault. In some examples, a combination of direct flow readings and pressure readings from different flow meters are used in conjunction to detect, isolate, and/or diagnose a fault. For example, if a direct flow reading from a first flow meter is zero and a pressure reading from second flow meter indicates high pressure, it can be determined that there is a fault with the first flow meter. In some examples, the variable readings are also used in conjunction with component operating status readings to detect, isolate, and/or diagnose a fault. For example, direct flow readings from a flow meter positioned are used in conjunction with operating status data from a pump to determine whether a fault lies with the flow meter, with the pump, or with another component of the water system.

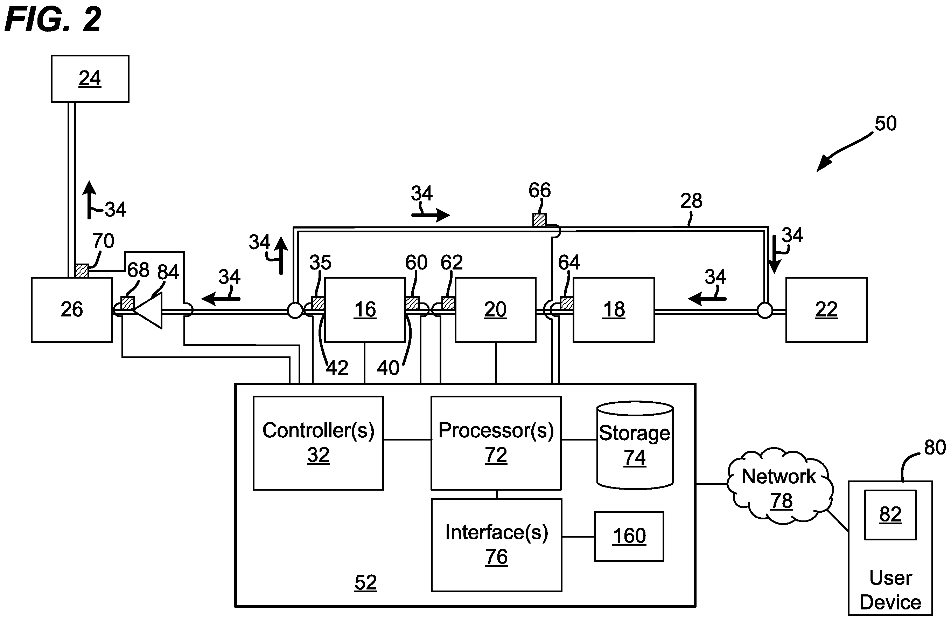

Referring now to Figure 2, a flow path of a water system 50 of a watercraft (e.g., the watercraft 4 of Figure 1), including an example diagnostics system 52 according to the present disclosure, is schematically represented.

With the pump 20 operating in forward direction, raw water is drawn from the water source through the through hull fitting 22 and flows downstream in the direction 34 to the strainer 18 where relatively large particles are filtered. From the strainer 18 the water passes through the pump 20 and then enters the housing 16 of a biocide (e.g., chlorine) generating electrolytic cell that includes an electrode arrangement within the housing 16. After passing through the outlet 42 of the housing 16 of the electrode arrangement of the electrolytic cell, the water, which is at this point may be treated with biocide flows to the water-reliant component(s) 26 of the water system and/or to the recirculation conduit 28. A valve 84 can control the flow distribution to the water-reliant component(s) 26 and the recirculation conduit 28. From the recirculation conduit 28, the water can flow outward through the THF 22, and/or back through the strainer 18 and the pump 20 to treat these components with biocide. From the water-reliant component(s) 26, the water flows out of the watercraft via the outlet 24.

A primary flow meter 35 is positioned at the outlet 42 of the housing 16 housing the electrode arrangement of the electrolytic cell. Alternatively, the primary flow meter can be positioned anywhere along the flow path such that it can detect a variable that directly or indirectly indicates flow.

Optionally, one or more secondary flow meters are positioned along the flow path. In the non-limiting example shown, a secondary flow meter 64 is positioned at or adjacent the outlet of the strainer 18, a secondary flow meter 62 is positioned at or adjacent the outlet of the pump 20, a secondary flow meter 60 is positioned at or adjacent the inlet 40 of the housing 16 of the electrolytic cell , a secondary flow meter 66 is positioned in the recirculation line 28, a secondary flow meter 68 is positioned downstream of the valve 84, and a secondary flow meter 70 is positioned downstream of the water-reliant component 26.

In some examples, a breakout or manifold downstream of the electrolytic cell (and, optionally, downstream of the inlet to the recirculation line in main flow path) channels flow, via different dedicated pipes defining dedicated flow paths, to different, corresponding water reliant devices. In such examples, each of the dedicated flow paths and/or dedicated pipes can be provided with a dedicated secondary flow meter to provide flow diagnostics data to the system pertaining to the corresponding dedicated flow path and/or corresponding water reliant device. Thus, flow meters can be used for diagnosing faults in specific regions of the overall system flow regime.

Each of the flow meters, the electrolytic cell, and the pump is operatively connected (e.g., with wires, leads, electronics, via a wireless network 78, etc.) to the diagnostics system 52, the flow meters being configured to output detected flow or other variable readings to the diagnostic system 52. For example, the primary flow meter 35 outputs direct flow readings at the outlet 42 of the electrolytic cell housing to the diagnostics system 52.

The diagnostics system 52 includes a computer readable storage 74 (e.g., a non-transitory computer-readable storage), one or more processors 72, one or more controllers 32, and an interface 76. The processor(s) receives flow readings from the flow meters and executes computer-readable instructions stored in the storage 74 to perform flow diagnostics for the system 50. The controller(s) 50 provide control signals that control the operation of the pump 20 and the electrolytic cell. In other examples, the processor(s) provide the control signals and other functionalities of the controller(s) without the need for separate controller(s). For example, the controller(s) 50 provide control signals that turn the pump 20 on and off, and set the flow direction and speed of the pump 20. In addition, the controller(s) 50 provide control signals that set the polarity and current across the electrode arrangement of the electrolytic cell in order to generate the appropriate amount of biocide.

The controller(s) 32 can use user inputs from the interface(s) 76 and/or inputs generated by computer readable instructions executed by the processor 72 to generate the appropriate control signals. For example, the storage can store a biocide generation lookup table that determines the appropriate control signals to be sent from the controller(s) 32 to the electrolytic cell under a given set of circumstances. As another example, a user can override the system and shut down the electrolytic cell by entering override shutdown commands via the interface(s) 76 that are passed to the controller(s) 52. The interface(s) 76 can include, e.g., an interactive graphical display. Inputs can be provided via one or more input devices 160, e.g., a touch screen, a keyboard, a microphone and voice recognition software application, etc. In addition, the diagnostics system 52 can be operatively connected via the network 78 to a remote user device 80 having its own interactive interface 82 and accompanying input device(s). The interfaces of the present disclosure need not be interactive and need not be graphical displays. For example, a speaker that generates an audible sound, or a warning light (e.g., one or more light-emitting diodes) can constitute an interface of the systems of the present disclosure.

A location of a component registering the fault can be determined based on the which flow meter has registered the flow change, and/or the nature of the flow change, as described in more detail below.

The computer readable instructions stored in the storage 74, when executed by the processor(s) 72, cause the processor(s) to diagnose faults in the system 50 based on changes in flow data (whether the data is from direct flow readings or derived from other variable readings), provide alerts via the interfaces(s) 76, 82 regarding the fault, suggest, via the interface(s) 76, 82 remedial action to remedy the fault, and/or cause the controller(s) 32 to perform a remedial action, such as shutting down the pump 20, or increasing or decreasing power thereto, increasing or decreasing current flow across the electrodes of the electrode arrangement of the electrolytic cell, etc.

One or more look-up tables, for example, stored in the storage 74, can be used by the processor(s) 72 to map a detected fault to an appropriate alert and appropriate remedial action.

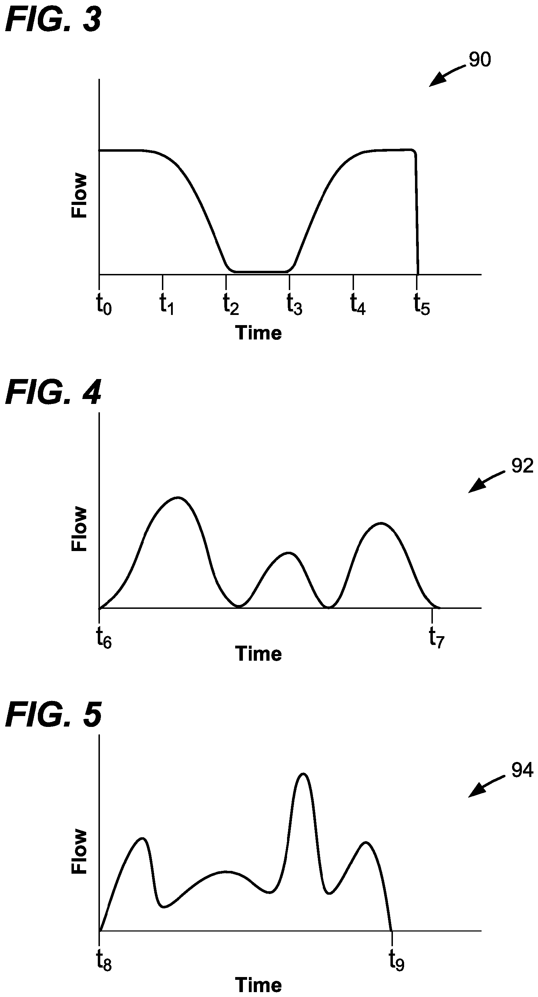

Diagnosing faults based on detected flow changes from flow data of flow meters will now be discussed with reference to Figures 3-5 and 7-8. For ease of description, the following description assumes that the flow data used to generate the flow plots of Figures 3-5 are direct output or derived from output by the primary flow meter 35 of the system 50. Each of the flow plots 90, 92, and 94 plots flow against time.

Referring to FIG. 3, in the example flow plot 90, reading samples from the flow meter 35 are sampled at a relatively high predetermined frequency, generating a sampling window between time t0 and time t5. The readings between time t0 and time t1 represent a steady flow condition through the flow meter 35. The readings between t1 and t2 represent a normal decrease in flow through the flow meter 35, e.g., due to normal cycling of the biocide generating system and water needs of the water-reliant component(s). The readings between t2 and t3 represent a normal low or zero flow through the flow meter 35. The readings between t3 and t4 represent a normal increase in flow through the flow meter 35, due to normal cycling of the biocide generating system and water needs of the water-reliant component(s). The readings between t4 and t5 represent a steady flow condition through the meter 35. At the discrete time t5, an anomalous and abrupt decrease in flow is detected.

The diagnostics system 52 is configured to analyze the plot 90 and, based on the plot 90, the predetermined sample frequency, and the component generating the readings (in this case the, flow meter 35) diagnose a fault using predetermined rules stored in the storage 74 and/or set by a user via an interactive interface. For example, the diagnostics system 52 determines, based on the abrupt nature (e.g., by calculating the slope of the plot, rate of change of the slope, identifying a discontinuity in the plot, etc.) of the flow decrease at t5, that a complete or partial clog of the flow meter 35 has occurred.

In another example, data from multiple flow meters of the system are compared during the same time period, from which a fault can be ascertained. A fault registered as common to multiple or all flow sensors in a given system could be diagnosed differently than a fault registered by only one flow sensor of a plurality of flow sensors of that system. For example, a clog in a downstream element will cause a change in upstream sensors. Sensing the attendant flow changes with multiple sensors indicates a system wide event or fault rather than a localized fault (e.g., a fault with a sensor itself). If, on the other hand, a downstream sensor indicates a fault and all upstream sensors in the same water path do not show any changes, the fault is most likely localized with the specific downstream sensor.

It should be appreciated that any type of analytics can be used to classify a flow change. In one example, one or more characteristics of a flow change is/are simply mapped to a particular type of predefined and/or user defined flow change, thereby providing a classified flow change from which a fault can be diagnosed. The characteristics can be qualitative characteristics or quantitative characteristics. The characteristics can be derived using an algorithm or statistical modeling, but need not be.

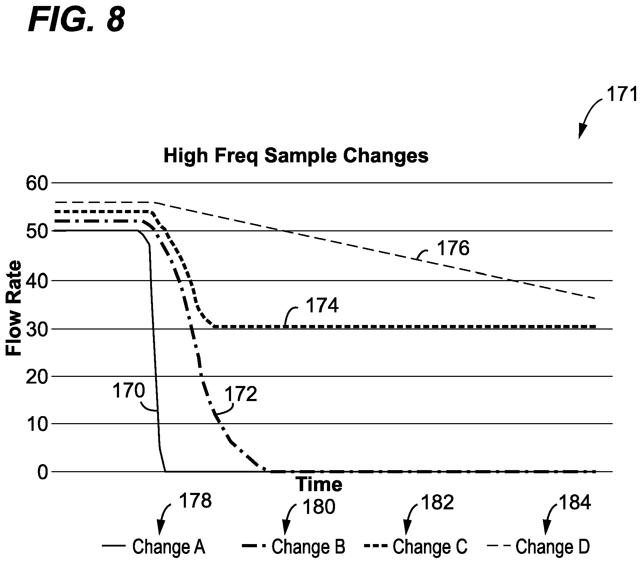

Referring to Figure 8, the diagnostics system can, for example, identify a discrete fault corresponding to each of the flow plots 170, 172, 174, and 176 on the graph 171 by performing statistical evaluation of each plot and mapping the corresponding flow change 178, 180, 182, 184, respectively, to a particular fault using the predefined and/or user-input rules. The slope or flow change 178 in the flow 170 can indicate, e.g., a malfunction of the flow meter that has rendered the flow meter inoperable. The slope or flow change 180 in the flow 172 can indicate, e.g., a total clog of the flow meter. The slope or flow change 182 of the flow 174 can indicate that a fault may lie elsewhere than in the flow meter. The slope or flow change 184 of the flow 176 can indicate a gradually developing clog. The type of fault diagnosed can dictate the type of remedial action indicated.

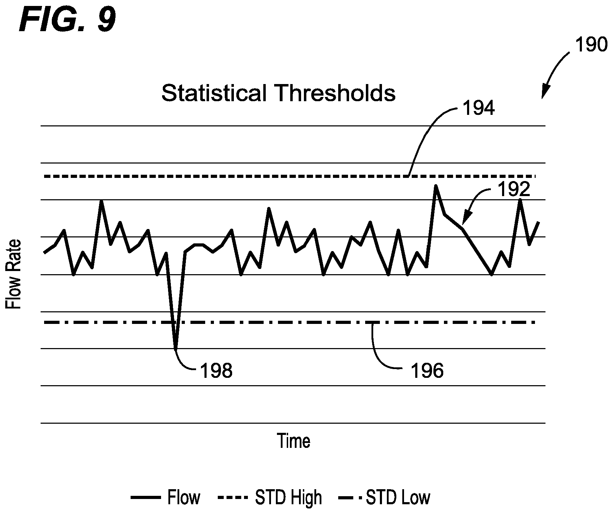

The rules that determine whether the flow change indicates a fault include one or more algorithms or statistical models. In Figure 8, for example, a set of statistical threshold rules are schematically illustrated in a plot 190. Stored rules and/or user/input rules establish upper and lower statistical flow thresholds that trigger a fault diagnosis. In Figure 9, the flow is represented by the line 192. In this example, the rules determine that a standard deviation of normal flow over a given period of time is calculated. The rules also dictate that an upper fault trigger threshold 194 and a lower fault trigger threshold 196 are set based on the calculated standard deviation of normal flow. In this example, the upper fault trigger threshold 194 and lower fault trigger threshold 196 are set at three standard deviations of the normal flow. That is, a fault is not diagnosed unless a flow reading reaches one of the thresholds 194, 196. In this example, a flow reading 198 triggers a fault diagnosis because the reading is below the lower threshold 196.

In some examples, the diagnostics system 52 uses operating data from other components as well to render the diagnosis. For example, the diagnostics system 52 receives a signal that the pump 20 is pumping at normal speed at the time t5 and uses that data in conjunction with the flow plot 90 to determine that the fault lies with the flow meter 35 and not the pump 20 or another flow regulating component of the water system, such as a valve. Once the fault has been diagnosed, the diagnostics system 52 causes one or more of: an alert to be generated at a local or remote user interface to indicate the existence and/or nature of the fault; a remedial action to be suggested at a local or remote user interface; and/or execution of a remedial action (e.g., shutting down the pump 20, increasing, decreasing, or switching polarity of the current to the electrode arrangement to generate more or less biocide, replacing a component, etc.), via the controller(s) 32.

In an alternative example, a high sampling frequency plot indicates that there is flow through the flow meter 35 at a given point in time tx but that at that time tx a signal from the pump indicates that the pump is off. In this example, the diagnostics system 52 is configured to determine that the there is a fault not in the flow meter 35 but in a flow regulating component of the water system, such as a valve or the pump, and appropriate alerts and remedial actions and/or remedial action suggestions ensue.

Referring to Figure 4, in the example flow plot 92, flow reading samples from the flow meter 35 are sampled at a relatively low predetermined frequency, generating a baseline characteristic flow over a relatively long period of time (e.g., on the order of days or weeks) between a time t6 and a time t7. The baseline characteristic flow is specific to the particular water system and watercraft (e.g., based on the type and usage of the watercraft), and the diagnostics system 52 is configured to generate such a watercraft-specific baseline characteristic flow.

The baseline characteristic flow can be stored in the storage 74 and used by the diagnostics system 52 to determine faults based on subsequent deviations from the baseline in long term flow through the flow meter 35 according to predetermined rules. For example, referring to Figure 5, in the example flow plot 94, flow reading samples from the flow meter 35 are sampled at a relatively low predetermined frequency, generating a long term flow plot (e.g., on the order of days or weeks) between a time t8 and a time t9 for the same watercraft and water system from which the baseline plot 92 was generated. The diagnostics system 52 compares the flow plot 94 with the flow plot 92 and, based on a comparison of one or more statistical characteristics of the plots, the predetermined sample frequency, and the component generating the readings (in this case the, flow meter 35) diagnose a fault using predetermined rules stored in the storage 74 and/or input by a user. Long term flows (such as the flow plot 94) can be measured at preset intervals, e.g., every few days or weeks, and compared with baseline characteristic flow.

The characteristics of the flow plots 92 and 94 that are compared can include, for example, regression line functions, average or total flow magnitude across the time period, average or total flow variability across the time period, and another statistical analyses including but not limited to those examples that have are described herein. Depending on the type and degree of deviation between the plot characteristics, a fault is diagnosed using preset rules stored in the storage 74. The rules that dictate when a fault has been detected based on long term flow change data can be different from the rules that dictate when a fault has been detected based on short term flow change data. Once the fault has been diagnosed, the diagnostics system 52 causes one or more of: an alert to be generated at a local or remote user interface indicating the existence and/or nature of the fault; a remedial action to be suggested at a local or remote user interface; and/or execution of a remedial action (e.g., shutting down the pump 20, increasing, decreasing, or switching polarity of the current to the electrode arrangement to generate more or less biocide, replacing a component, etc.), via the controller(s) 32.

For example, the diagnostics system 52 determines, based on an increase in flow variability between the time t8 and the time t9 as compared with the baseline characteristic flow variability (and based on the relatively low sampling frequency) that one or more valves in the system have malfunctioned. In some examples, the diagnostics system 52 uses operating, flow, and/or or pressure data from other components as well to render the diagnosis, such as a from a pump, or another flow meter positioned to measure flow or another variable at another system component, such as a valve, a water-reliant component of the system, a pump, a strainer, etc.

Each component that outputs operating signals or flow or pressure data to the diagnostics system 52 can include an electronic fingerprint that identifies the component and/or its physical placement in the system 52 to assist in locating the faulty component to perform remedial action.

In addition, both high frequency and low frequency sampling diagnostics can be analyzed in conjunction to diagnose a fault.

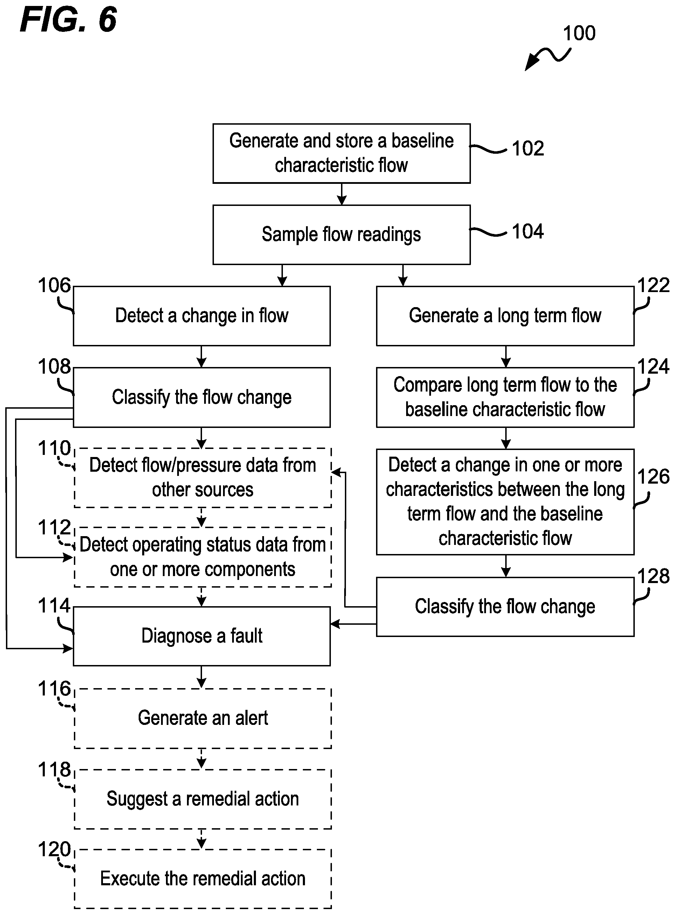

Referring to Figure 6, an example process flow 100 according to the present disclosure will be described. The order of steps is exemplary only and not all of the steps are required. One or more of the steps can be performed by the diagnostics system 52 (Figure 2).

In a step 102, a baseline characteristic flow for a given water system and watercraft is generated and stored using a predefined first sampling frequency.

In a step 104, flow readings from a flow meter are sampled. Depending on the sample frequency of the flow readings at the step 104, the process flow continues either to a step 106 (for relatively high sample frequency) or a step 108 (for a relatively low sample frequency).

At the step 106, a change in flow at a discrete time is detected based on the sample rate.

At the step 108, the flow change is classified according to preset rules as one of a plurality of change classifications to provide a classified flow change.

Optionally, at a step 110, flow data from one or more other flow meters are detected.

Optionally, at a step 112, operating status data from one or more components of the water system are detected.

At a step 114 a fault in the water system is diagnosed based on the classified flow change and, optionally, the flow data and the operating status data, the diagnosed fault, the diagnosed fault optionally including a type and/or location of the fault.

At an optional step 116, an alert is generated regarding the fault.

At an optional step 118, a remedial action is suggested via a user interface.

At an optional step 120, one or more remedial actions are executed automatically and/or by a user of the water system.

Following step 108, at a step 122, a long term flow is generated.

At a step 124, the long term flow is compared to the baseline characteristic flow.

At a step 126, a change in one or more characteristics between the long term flow and the baseline characteristic flow is detected.

Following step 126, at a step 128 the flow change is classified according to preset rules as one of a plurality of change classifications to provide a classified flow change.

Following step 128, the process flow continues to steps 110, 112, 114, 116, 118, and 120 as described above.

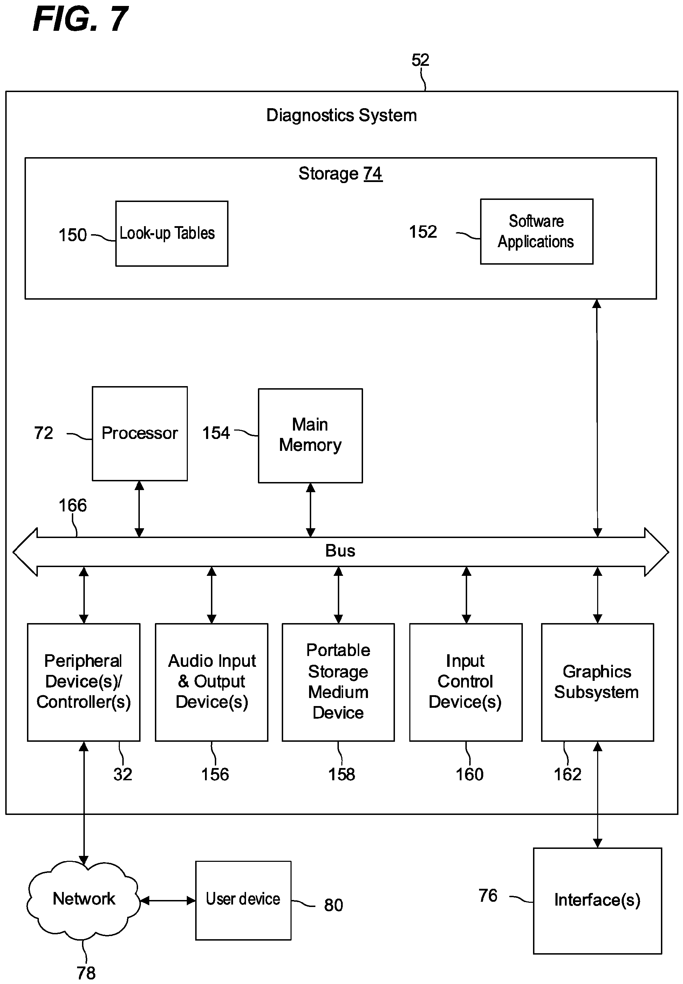

Figure 7 is a block diagram showing an example configuration of the diagnostics system 52 and other components constructed to realize one or more aspects of the example embodiments described herein. The diagnostics system 52 may be connected over the network 78, which itself may include one or more servers, to remote devices, such as the user device 80.

The diagnostics system 52 includes the processor(s) 72. Also included are a main memory 154 and an interconnect bus 166. The processor(s) 72 may include without limitation a single microprocessor, or may include a plurality of microprocessors for configuring the diagnostics system 52 for providing the functionalities described herein. The main memory 154 stores, among other things, instructions and/or data for execution by the processor(s) 72. The main memory 154 may include banks of dynamic random access memory (DRAM), as well as cache memory.

The diagnostics system 52 includes the storage device 74, peripheral device(s), such as the controller(s) 32, optionally audio input and output device(s) 156 (e.g., a microphone, a speaker) for receiving audio commands and generating audible alerts, optionally a portable non-transitory storage medium device 158, input control device(s) 160, a graphics subsystem 162, and the output interactive graphical interface 76. For explanatory purposes, all components of the system 52 are shown in FIG. 7 as being coupled via the bus 166. However, the system 52 is not so limited. Elements of the system 52 may be coupled via one or more data transport means. For example, the processor(s) and/or the main memory may be coupled via a local microprocessor bus. The storage device, peripheral device(s), portable storage medium device(s), and/or graphics subsystem may be coupled via one or more input/output (I/O) buses.

The storage device 74 may be a nonvolatile storage device for storing data and/or instructions for use by the processor(s) 72, including e.g., look-up tables 150 and computer-readable instructions (including, e.g., software applications 152) that provide the functionalities described herein. The storage device 74 may be implemented, for example, with a magnetic disk drive or an optical disk drive. In a software embodiment, the storage device 74 is configured for loading contents of the storage device 74 into the main memory 154. Memory may be embodied as one or more of the storage device 74, main memory 154, or portable storage medium device 158.

The peripheral device(s), in additional to the controller(s) 32, may include any type of computer support device, such as, for example, an input/output (I/O) interface configured to add additional functionality to the system 52. For example, the peripheral device(s) may include a network interface card for interfacing the system 52 with the network 58.

The input control device(s) 160 provide a portion of an interface for the system 52. The input control device(s) 160 may include a keypad and/or a cursor control and/or a touch screen. The keypad may be configured for inputting alphanumeric characters and/or other key information. The cursor control device may include, for example, a handheld controller or mouse, a rotary input mechanism, a trackball, a stylus, and/or cursor direction keys. In order to display textual and graphical information, the system 53 may include the graphics subsystem 162 and the graphical interface 76. The graphical interface 76 may include a display such as a TFT (Thin Film Transistor), TFD (Thin Film Diode), OLED (Organic Light-Emitting Diode), AMOLED display (active-matrix organic light-emitting diode), and/or liquid crystal display (LCD)-type displays. The displays can also be touchscreen displays, such as capacitive and resistive-type touchscreen displays. As described above, the interface need not be graphical and need not be interactive.

The graphics subsystem 162 receives textual and graphical information, and processes the information for output to the output display of the interactive graphical interface 76.

Input control devices 160 can control the operation and various functions of the system 52. Input control devices 160 can include any components, circuitry, or logic operative to drive the functionality of the system 52.

The instructions on the non-transitory machine-accessible, machine-readable or computer-readable medium may be used to program a computer system or other electronic device. The machine- or computer-readable medium may include, but is not limited to solid state flash memory, magnetic disks, optical disks, magneto-optical disks, or other types of media/machine-readable medium suitable for storing or transmitting electronic instructions. The techniques described herein are not limited to any particular software configuration. They may find applicability in any computing or processing environment. The terms "computer-readable", "machine-accessible medium" or "machine-readable medium" used herein shall include any medium that is capable of storing, encoding, or transmitting a sequence of instructions for execution by the machine, and which causes the machine to perform any one of the methods described herein. Further, it is common in the art to speak of software, in one form or another (e.g., program, procedure, process, application, module, engine, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media having instructions stored thereon or therein that can be used to control, or cause, a computer to perform any of the procedures of the example embodiments of the invention. The storage medium may include without limitation an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, some implementations include software for controlling both the hardware of the system and for enabling the system or microprocessor to interact with a human user or other mechanism utilizing the results of the example embodiments of the invention. Such software may include without limitation device drivers, operating systems, and user applications. Ultimately, such computer-readable media further include software for performing example aspects of the invention, as described above.

Included in the programming and/or software of the system are software modules for implementing the methods described above.

The various examples described above are provided by way of illustration only and should not be construed to limit the scope of the present disclosure. Those skilled in the art will readily recognize various modifications and changes that may be made with respect to the examples illustrated and described herein without departing from the scope of the invention as set out in the appended claims.

## Claims

1. A water system (50) of a watercraft (4), the water system being configured to draw water from a water source on which the watercraft is supported through at least a first port (22) positioned in a body or hull of the watercraft, the water system defining a flow path when water is being drawn through the first port into the water system, the system comprising:
a flow meter (35) for measuring flow in the flow path; and
a diagnostics system (52) operatively connected to the flow meter and configured to:
receive flow readings generated using the flow meter;
detect a flow change in the flow readings;
classify the flow change as one of a plurality of change classifications to provide a classified flow change; and
diagnose a clog or a partial clog in a strainer (18) of the water system based on the classified flow change, wherein the clog or the partial clog is determined based in part on a rate of change of the flow readings.

2. The water system of claim 1, the system further comprising:
an electrode arrangement (13) adapted to be incorporated as part of an electrolytic cell (14) through which water drawn from the water source flows.

3. The water system of claim 1 or 2, wherein the flow meter (35) is a direct flow meter configured to directly measure flow in the flow path.

4. The water system of claim 1 or 2, wherein the flow meter (35) is a pressure sensor configured to measure a fluid pressure in the flow path.

5. The water system of claim 1 or 2, wherein the flow meter (35) is a temperature sensor.

6. The water system of claim 5, wherein the temperature sensor is configured to measure a temperature of electronics of the water system.

7. The water system of any preceding claim, wherein the diagnostics system is further configured to:
provide an alert, the alert including an identification of the clog or the partial clog.

8. The water system of claim 7, wherein the alert includes an audible component and/or a textual component displayed on a graphical interface of a user device and/or illumination of a light emitter.

9. The water system of any preceding claim, wherein the diagnostics system is further configured to:
determine a remedial action to be performed to remedy the clog or the partial clog.

10. The water system of claim 9, wherein the diagnostics system is further configured to:
suggest the remedial action via a user device and/or perform the remedial action.

11. The water system of any of claims 9-10, wherein the remedial action includes one or more of unclogging the strainer (18) and replacing the strainer (18).

12. The water system of any preceding claim,
wherein the flow meter (35) is a primary flow meter; and
wherein the water system includes one or more secondary flow meters (60; 62; 64) positioned for measuring flow in the flow path, the diagnostics system (30) being configured to:
receive secondary readings generated using the one or more secondary flow meters, wherein the diagnose the clog or partial clog in the water system is also based on the secondary readings.

13. The water system of any preceding claim, wherein the classify and the diagnose are performed using rules, wherein the rules compare detected flow to a preset threshold flow, and wherein the preset threshold flow is based on a standard deviation of a normal flow.

14. The water system of claim 13, wherein the rules include calculating a slope of a flow plot over time to provide a calculated slope and comparing the calculated slope to preset slopes.

15. A method of performing diagnostics on a water system of a watercraft (4), the water system being configured to draw water from a water source on which the watercraft (4) is supported through at least a first port (22) positioned in a body or hull of the watercraft (4), the water system defining a flow path when water is being drawn through the first port (22) into the water system, the method comprising:
receiving flow readings;
detecting a flow change in the flow readings;
classifying the flow change as one of a plurality of change classifications to provide a classified flow change; and
diagnosing a clog or a partial clog in a strainer (18) of the water system based on the classified flow change, wherein the clog or the partial clog is determined based in part on a rate of change of the flow readings.

## Patentansprüche

1. Wassersystem (50) eines Wasserfahrzeugs (4), wobei das Wassersystem zum Ziehen von Wasser aus einer Wasserquelle, auf der das Wasserfahrzeug getragen wird, durch mindestens einen ersten in einem Körper oder Rumpf des Wasserfahrzeugs positionierten Einlass (22) konfiguriert ist, wobei das Wassersystem einen Strömungsweg definiert, wenn Wasser durch den ersten Einlass in das Wassersystem gezogen wird, wobei das System Folgendes umfasst:
einen Strömungsmesser (35) zum Messen der Strömung im Strömungsweg; und
ein Diagnosesystem (52), das mit dem Strömungsmesser operativ verbunden und konfiguriert ist zum:
Empfangen von mittels des Strömungsmessers erzeugten Strömungsmesswerten;
Erkennen einer Strömungsänderung in den Strömungsmesswerten;
Klassifizieren der Strömungsänderung als eine von mehreren Änderungsklassifizierungen, um eine klassifizierte Strömungsänderung bereitzustellen; und
Diagnostizieren einer Verstopfung oder einer teilweisen Verstopfung in einem Sieb (18) des Wassersystems auf der Basis der klassifizierten Strömungsänderung, wobei die Verstopfung oder die teilweise Verstopfung teilweise auf der Basis einer Änderungsrate der Strömungsmesswerte bestimmt wird.

2. Wassersystem nach Anspruch 1, wobei das System ferner Folgendes umfasst:
eine Elektrodenanordnung (13), die zum Einbauen als Teil einer Elektrolysezelle (14) ausgelegt ist, durch die von der Wasserquelle gezogenes Wasser fließt.

3. Wassersystem nach Anspruch 1 oder 2, wobei der Strömungsmesser (35) ein Direktströmungsmesser ist, der zum direkten Messen von Strömung im Strömungsweg konfiguriert ist.

4. Wassersystem nach Anspruch 1 oder 2, wobei der Strömungsmesser (35) ein Drucksensor ist, der zum Messen eines Fluiddrucks im Strömungsweg konfiguriert ist.

5. Wassersystem nach Anspruch 1 oder 2, wobei der Strömungsmesser (35) ein Temperatursensor ist.

6. Wassersystem nach Anspruch 5, wobei der Temperatursensor zum Messen einer Temperatur von Elektronik des Wassersystems konfiguriert ist.

7. Wassersystem nach einem vorherigen Anspruch, wobei das Diagnosesystem ferner konfiguriert ist zum:
Ausgeben einer Warnung, wobei die Warnung eine Identifizierung der Verstopfung oder teilweisen Verstopfung umfasst.

8. Wassersystem nach Anspruch 7, wobei die Warnung eine hörbare Komponente und/oder eine auf einer Grafikoberfläche eines Benutzergeräts angezeigte Textkomponente und/oder Beleuchtung eines Lichtemitters umfasst.

9. Wassersystem nach einem vorherigen Anspruch, wobei das Diagnosesystem ferner konfiguriert ist zum:
Bestimmen einer Abhilfemaßnahme, die zur Behebung der Verstopfung oder teilweisen Verstopfung durchzuführen ist.

10. Wassersystem nach Anspruch 9, wobei das Diagnosesystem ferner konfiguriert ist zum:
Vorschlagen der Abhilfemaßnahme über ein Benutzergerät und/oder zum Durchführen der Abhilfemaßnahme.

11. Wassersystem nach einem der Ansprüche 9-10, wobei die Abhilfemaßnahme das Beseitigen einer Verstopfung des Siebs (18) und/oder das Ersetzen des Siebs (18) umfasst.

12. Wassersystem nach einem vorherigen Anspruch,
wobei der Strömungsmesser (35) ein primärer Strömungsmesser ist; und
wobei das Wassersystem einen oder mehrere sekundäre Strömungsmesser (60; 62; 64) umfasst, die zum Messen von Strömung im Strömungsweg positioniert sind, wobei das Diagnosesystem (30) konfiguriert ist zum:
Empfangen sekundärer Messwerte, die mittels der ein oder mehreren sekundären Strömungsmesser erzeugt werden, wobei die Diagnose der Verstopfung oder teilweisen Verstopfung im Wassersystem auch auf den sekundären Messwerten basiert.

13. Wassersystem nach einem vorherigen Anspruch, wobei das Klassifizieren und die Diagnose mit Regeln durchgeführt werden, wobei die Regeln die erfasste Strömung mit einer voreingestellten Schwellenströmung vergleichen, und wobei die voreingestellte Schwellenströmung auf einer Standardabweichung einer normalen Strömung basiert.

14. Wassersystem nach Anspruch 13, wobei die Regeln das Berechnen einer Steigung eines Strömungsdiagramms über die Zeit zum Erzielen einer berechneten Steigung und Vergleichen der berechneten Steigung mit voreingestellten Steigungen umfassen.

15. Verfahren zum Durchführen einer Diagnose an einem Wassersystem eines Wasserfahrzeugs (4), wobei das Wassersystem zum Ziehen von Wasser aus einer Wasserquelle, auf der das Wasserfahrzeug (4) getragen wird, durch mindestens einen ersten Einlass (22) konfiguriert ist, der in einem Körper oder Rumpf des Wasserfahrzeugs (4) positioniert ist, wobei das Wassersystem einen Strömungsweg definiert, wenn Wasser durch den ersten Einlass (22) in das Wassersystem gezogen wird, wobei das Verfahren Folgendes umfasst:
Empfangen von Strömungsmesswerten;
Erfassen einer Strömungsänderung in den Strömungsmesswerten;
Klassifizieren der Strömungsänderung als eine von mehreren Änderungsklassifizierungen, um eine klassifizierte Strömungsänderung bereitzustellen; und
Diagnostizieren einer Verstopfung oder einer teilweisen Verstopfung in einem Sieb (18) des Wassersystems auf der Basis der klassifizierten Strömungsänderung, wobei die Verstopfung oder die teilweise Verstopfung teilweise auf der Basis einer Änderungsrate der Strömungsmesswerte bestimmt wird.

## Revendications

1. Système d'eau (50) d'une embarcation (4), le système d'eau étant configuré pour prélever de l'eau, dans une source d'eau sur laquelle l'embarcation est soutenue, par au moins un premier orifice (22) positionné dans un corps ou une coque de l'embarcation, le système d'eau définissant une voie d'écoulement lorsque l'eau est prélevée par le premier orifice jusque dans le système d'eau, le système comprenant :
un débitmètre (35) pour mesurer un débit dans la voie d'écoulement ; et
un système de diagnostic (52) raccordé de manière fonctionnelle au débitmètre et configuré pour :
recevoir des relevés de débit générés au moyen du débitmètre ;
détecter une variation de débit dans les relevés de débit ;
classer la variation de débit dans une classification de variation parmi une pluralité de classifications de variation afin de fournir une variation de débit classée ; et
diagnostiquer un colmatage ou un colmatage partiel dans une crépine (18) du système d'eau sur la base de la variation de débit classée, le colmatage ou le colmatage partiel étant déterminé sur la base, au moins en partie, d'un taux de variation des relevés de débit.

2. Système d'eau selon la revendication 1, le système comprenant en outre :
un agencement d'électrodes (13) conçu pour être incorporé au sein d'une cellule électrolytique (14) dans laquelle circule de l'eau prélevée dans la source d'eau.

3. Système d'eau selon la revendication 1 ou 2, dans lequel le débitmètre (35) est un débitmètre direct configuré pour mesurer directement un débit dans la voie d'écoulement.

4. Système d'eau selon la revendication 1 ou 2, dans lequel le débitmètre (35) est un capteur de pression configuré pour mesurer une pression de fluide dans la voie d'écoulement.

5. Système d'eau selon la revendication 1 ou 2, dans lequel le débitmètre (35) est un capteur de température.

6. Système d'eau selon la revendication 5, dans lequel le capteur de température est configuré pour mesurer une température de l'électronique du système d'eau.

7. Système d'eau selon l'une quelconque des revendications précédentes, dans lequel le système de diagnostic est en outre configuré pour :
fournir une alerte, l'alerte comprenant une identification du colmatage ou du colmatage partiel.

8. Système d'eau selon la revendication 7, dans lequel l'alerte comprend un élément sonore et/ou un composant textuel affiché sur une interface graphique d'un dispositif d'utilisateur et/ou un éclairage d'un émetteur de lumière.

9. Système d'eau selon l'une quelconque des revendications précédentes, dans lequel le système de diagnostic est en outre configuré pour :
déterminer une action corrective à effectuer pour corriger le colmatage ou le colmatage partiel.

10. Système d'eau selon la revendication 9, dans lequel le système de diagnostic est en outre configuré pour :
suggérer l'action corrective par l'intermédiaire d'un dispositif utilisateur et/ou effectuer l'action corrective.

11. Système d'eau selon l'une quelconque des revendications 9 et 10, dans lequel l'action corrective comprend une ou plusieurs actions parmi le décolmatage de la crépine (18) et le remplacement de la crépine (18).

12. Système d'eau selon l'une quelconque des revendications précédentes,
le débitmètre (35) étant un débitmètre principal ; et
le système d'eau comprenant un ou plusieurs débitmètres secondaires (60 ; 62 ; 64) positionnés pour mesurer un débit dans la voie d'écoulement, le système de diagnostic (30) étant configuré pour :
recevoir des relevés secondaires générés au moyen du ou des débitmètres secondaires, le diagnostic du colmatage ou du colmatage partiel dans le système d'eau étant également basé sur les relevés secondaires.

13. Système d'eau selon l'une quelconque des revendications précédentes, dans lequel la classification et le diagnostic sont effectués au moyen de règles, les règles comparant un débit détecté à un débit seuil prédéfini, et le débit seuil prédéfini étant basé sur un écart-type d'un débit normal.

14. Système d'eau selon la revendication 13, dans lequel les règles consistent à calculer une pente d'un tracé d'écoulement au fil du temps pour fournir une pente calculée et à comparer la pente calculée à des pentes prédéfinies.

15. Procédé de réalisation de diagnostics sur un système d'eau d'une embarcation (4), le système d'eau étant configuré pour prélever de l'eau, dans une source d'eau sur laquelle l'embarcation (4) est soutenue, par au moins un premier orifice (22) positionné dans un corps ou une coque de l'embarcation (4), le système d'eau définissant une voie d'écoulement lorsque l'eau est prélevée par le premier orifice (22) jusque dans le système d'eau, le procédé consistant à :
recevoir des relevés de débit ;
détecter une variation de débit dans les relevés de débit ;
classer la variation de débit dans une classification de variation parmi une pluralité de classifications de variation afin de fournir une variation de débit classée ; et
diagnostiquer un colmatage ou un colmatage partiel dans une crépine (18) du système d'eau sur la base de la variation de débit classée, le colmatage ou le colmatage partiel étant déterminé sur la base, au moins en partie, d'un taux de variation des relevés de débit.
